# EUROPÄISCHE PATENTSCHRIFT

(11) **EP 2 014 960 B1**
(45) Veröffentlichungstag und Bekanntmachung des Hinweises auf die Patenterteilung: **26.12.2012**
(21) Anmeldenummer: 08158770.1
(22) Anmeldetag: 23.06.2008
(51) Int. Cl.: F16K 3/02

(54) **Absperrarmatur mit großer Absperrscheibe**
Shut-off valve with large shut-off disc
Armature de verrouillage dotée d'une vanne d'arrêt

(30) Priorität: 13.07.2007 DE 202007009817 U
(43) Veröffentlichungstag der Anmeldung: 14.01.2009
(73) Patentinhaber: Hawle Armaturen GmbH, 83395 Freilassing (DE)
(72) Erfinder: Käfer, Manuela, 5310 Mondsee (AT); Frey, Alexander, 83404 Feldkirchen (DE)
(74) Vertreter: Schwabe - Sandmair - Marx

(56) Entgegenhaltungen:
- EP-A- 1 347 221
- AT-B- 278 457
- CH-A- 375 184
- DE-A1- 3 834 974
- DE-A1- 10 112 642
- DE-B3-102005 004 711
- US-A- 3 071 343
- US-A- 3 223 381
- US-A- 3 333 814

## Beschreibung

Die Erfindung betrifft ein Absperrsystem in einer Absperrarmatur für Flüssigkeits-oder Gasleitungen. Solche Absperrarmaturen werden beispielsweise in Versorgungs-oder Entsorgungsrohre eingesetzt, um diese bei Bedarf absperren zu können, und sie weisen ein Gehäuse auf, in dessen Oberteil eine Spindel gelagert ist und in dessen Unterteil der Strömungskanal verläuft, in welchen eine abgedichtete Absperrscheibe von der Spindel angetrieben ein- und ausgefahren werden kann. So geartete Absperrschieber sind beispielsweise aus der DE 100 50 240, der EP 1 347 221 oder der US 2,606,740 bekannt.

Bei solchen bekannten Absperrarmaturen wirkt durch den Fluid-Druck in der Leitung eine relativ große Flächenpressung auf die Absperrscheibe und deren Lagerung, was die Verwendung von großflächigen Dichtelementen notwendig macht. Außerdem bleiben bei solchen herkömmlichen Armaturen oft Verschmutzungen hängen, die zwischen die Absperrscheibe und die Dichtung eintreten.

Es ist die Aufgabe der vorliegenden Erfindung, eine Absperrarmatur für Flüssigkeits- oder Gasleitungen dahingehend zu optimieren, dass die oben genannten Nachteile wenigstens teilweise überwunden werden.

Diese Aufgabe wird gemäß einem Aspekt der Erfindung durch eine Absperrarmatur des Anspruchs 1 gelöst. Die Unteransprüche definieren bevorzugte Ausführungsformen der Erfindung.

Gemäß dem genannten Aspekt der Erfindung wird eine Absperrarmatur bereitgestellt, welches ein scheibenförmiges Absperrelement aufweist, das in den Strömungsdurchgang der Absperrarmatur eingebracht werden kann, um diesen zu verschließen, wobei die Fläche des Absperrelementes wesentlich größer gestaltet ist als die Fläche des Strömungsdurchganges, indem die horizontale Breite des Absperrelements wesentlich größer als der Durchmesser des Strömungsdurchgangs. Mit anderen Worten ragt das Strömungselement in der Position, wo es den Strömungsdurchgang abdichtet, zumindest abschnittsweise wesentlich über den Strömungsdurchgang hinaus, und eine solche erfindungsgemäße Ausgestaltung gestattet es, die Führung des Absperrelements gegenüber bekannten Ausführungsformen deutlich zu verbessern. Der Kontakt zwischen der Führung des Absperrelements und dem Absperrelement selbst kann sehr viel großflächiger erfolgen, wodurch die Flächenpressung auf die Führungselemente und natürlich auch auf die Abdichtung, welche den Strömungsdurchgang umgibt, stark verringert werden kann. Dies hat unmittelbar den Vorteil, dass die Abdichtung kleinflächiger gestaltet werden kann, weil sie durch geringere Kräfte beaufschlagt wird. Natürlich wird auch die Lebensdauer der Abdichtung dadurch erhöht.

Die hinzugewonnenen Führungsflächen erstrecken sich horizontal neben dem Strömungsdurchgang. Da die Absperrelemente meist ohnehin seitlich geführt werden, gestaltet sich eine entsprechende Ausgestaltung bzw. Anpassung der Führungselemente problemlos.

Bei erfindungsgemäßer Absperrarmatur ist die Unterkante des Absperrelements lediglich im Mittelbereich konvex gekrümmt, insbesondere bogenförmig oder kreisbogenförmig gekrümmt, wobei sie außerhalb des Mittelbereichs eine andere Linienführung aufweist, vorzugsweise äußere gerade Abschnitte.

Das Verhältnis der Fläche des Absperrelements zur Fläche des Strömungsdurchgangs, insbesondere das Verhältnis der horizontalen Breite von Absperrelement und Strömungsdurchgang-Durchmesser kann für unterschiedliche Ausführungsformen von Absperrarmaturen verschieden sein. Bei ohnehin großen Absperrarmaturen kann schon durch eine relativ geringe Flächenvergrößerung eine relativ hohe Vergrößerung der Führungsfläche erzielt werden, und damit auch eine relativ starke Verringerung der Flächenpressung. Bei ohnehin kleinen Armaturen bzw. kleinen Strömungsdurchgängen ist unter bestimmten Umständen eine relativ starke Erhöhung des genannten Verhältnisses notwendig, um die Flächenpressungen insgesamt niedriger zu machen.

So kann, wenn man die Breite des Absperrelements betrachtet, das Verhältnis der horizontalen Breite des Absperrelements zum Durchmesser des Strömungsdurchgangs mindestens 1,1, mindestens 1,2, mindestens 1,6 oder auch mindestens 2 betragen, je nach dem Anwendungsfall. Bei Armaturen mit größeren Strömungsdurchgängen wird das Verhältnis erfindungsgemäß insbesondere geringer sein als bei Armaturen mit kleineren Strömungsdurchgängen.

Beispielsweise liegt das Verhältnis der horizontalen Breite des Absperrelements zum Durchmesser des Strömungsdurchgangs bei Durchmesserbereichen von etwa 30mm bis etwa 130mm in einem Bereich von 2 bis 1,5. Für Durchmesserbereiche von etwa 130mm bis etwa 220mm kann das Verhältnis in einem Bereich von 1,5 bis 1,2 liegen. Hier sind nur Beispielswerte angegeben, die je nach den vorhandenen Verhältnissen noch angepasst werden können.

Bei einer Ausführungsvariante der Erfindung weist das Absperrelement an seinem über den Strömungsdurchgang hinausgehenden Flächenteil, insbesondere an seinen seitlichen Flächenteilen Führungsabschnitte auf, und speziell kann ein Hauptteil der über den Strömungsdurchgang hinausgehenden Flächenteile als Führungsabschnitt dienen.

Es ist von Vorteil, wenn das Absperrelement aus hochwertigem Edelstahl hergestellt ist.

Gemäß einem weiteren Aspekt der vorliegenden Erfindung, bei dem auch alle oben genannten Merkmale verwirklicht werden können, wird eine Absperrarmatur bereitgestellt, bei der eine Dichtung am Strömungsdurchgang angeordnet ist, die in ihrem unteren Bereich einen Aufsitzdichtungsabschnitt aufweist, auf dem der Unterteil des Absperrelements im Dichtstoß zu liegen kommen kann. Hierbei wird erfindungsgemäß die Unterkante des Absperrelements und insbesondere entsprechend auch der Aufsitzdichtungsabschnitt eine Krümmung aufweisen, die wesentlich geringer ist als die Krümmung des Strömungsdurchgangs. Mit anderen Worten wird die Aufsitzdichtung erfindungsgemäß sehr viel flacher gekrümmt ausgestaltet als bei herkömmlichen Armaturen. Dies hat den Vorteil, dass Verschmutzungen sehr leicht ausgespült werden können und so die Entwicklung von Keimen verhindert werden kann.

Bei einer Ausführungsform der erfindungsgemäßen Absperrarmatur ist die Unterkante bzw. der Aufsitzdichtungsabschnitt zumindest im Mittelbereich konvex gekrümmt, insbesondere bogenförmig oder kreisbogenförmig gekrümmt, und der Radius der Unterkantenkrümmung bzw. des Aufsitzdichtungsabschnittes ist dort wesentlich größer als der Radius des Strömungsdurchgangs.

Auch für diesen Fall hängt das optimale Verhältnis des Unterkantenkrümmungsradius bzw. des Aufsitzdichtungsabschnittsradius zum Strömungsdurchgangsradius von der absoluten Größe des Strömungsdurchgangs ab. Es kann mindestens 1,3, mindestens 1,5, mindestens 2, mindestens 3 oder speziell auch 3 bis 4 betragen. Je kleiner der Strömungsdurchgang ist, desto höher wird das Verhältnis liegen, und beispielsweise für Strömungsdurchmesserbereiche von etwa 30mm bis 130mm kann es im Bereich von 4 bis 2 liegen, während für Strömungsdurchmesserbereiche von etwa 130mm bis etwa 220mm ein Verhältnisbereich von 2 bis 1,3 sinnvoll sein kann.

Die Erfindung wird im Weiteren anhand von Ausführungsformen und unter Bezugnahme auf die beiliegenden Zeichnungen näher erläutert. Sie kann alle hierin beschriebenen Merkmale einzeln sowie in jedweder sinnvollen Kombination umfassen. In den Zeichnungen zeigen:

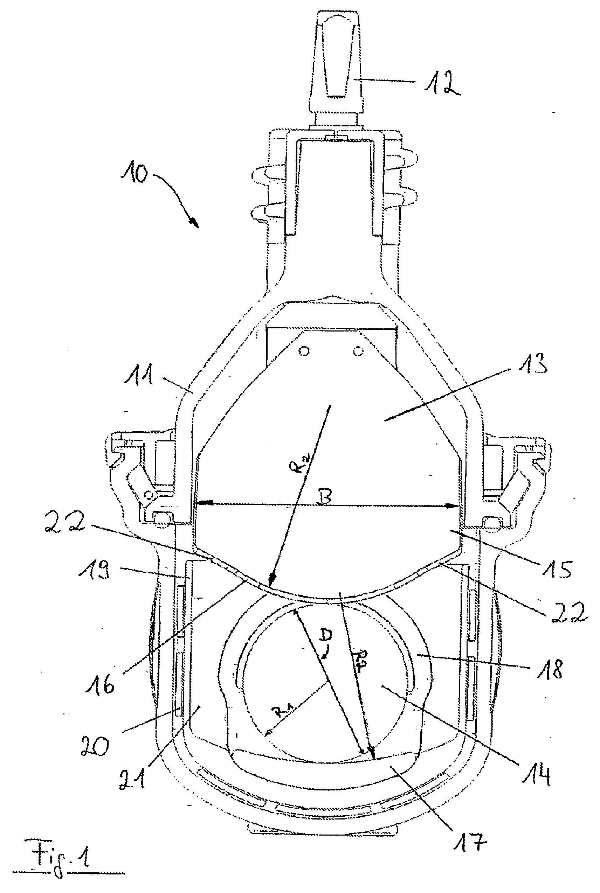

- Figur 1: einen Längsschnitt durch eine erfindungsgemäße Absperrarmatur mit einem Absperrsystem; und

Die in Figur 1 im Schnitt dargestellte Absperrarmatur trägt insgesamt das Bezugszeichen 10, und sie weist ein Gehäuse 11 sowie eine Spindel 12 auf, von der nur der obere Werkzeugangriff zu sehen ist. Mit der Spindel 12 wird eine Absperrscheibe 13 im Gehäuse 11 nach oben und unten gefahren, um den Strömungsdurchgang 14 zu verschließen oder für die Strömung freizugeben. Am Strömungsdurchgang 14 ist eine Dichtung 18 angeordnet. Die Dichtung 18 weist einen oberen Abschnitt auf, der um den Strömungsdurchgang 14 herum vorgesehen ist sowie einen unteren Aufsitzdichtungsabschnitt 17. Während der umlaufende Teil der Dichtung 18 beim Verschließen des Strömungsdurchgangs 14 seitlich an der Absperrscheibe 13 zu liegen kommt, bildet der Aufsitzdichtungsabschnitt 17 zusammen mit der Unterkante 16 der Absperrscheibe 13 eine Stoßdichtung, d.h. die Unterkante 16 kommt auf dem oberen Rand des Abschnittes 17 zu liegen und dichtet dabei im Stoß ab.

Wenn die Absperrscheibe 13 nach unten gefahren wird, wird sie im Führungseinsatz 19 geführt, der aus zwei Teilen besteht, die über Halteelemente 20 zusammengehalten werden. Die Führung 19 führt die Scheibe 13 außen, und zwar in den Bereichen, die in der Zeichnung mit 21 und 15 bezeichnet sind.

Die Breite B (horizontale Breite) der Absperrscheibe 13 ist wesentlich größer gehalten als der Durchmesser D des Strömungsdurchgangs, und bei dem dargestellten Ausführungsbeispiel beträgt das Verhältnis dieser beiden Größen etwa

1,6. Durch diese konstruktive Maßnahme wird der äußere Rand der Absperrscheibe 13, der seitlich über den Strömungsdurchgang 14 hinausragt, sehr breit, und dieser überstehende Rand kann sehr gut zur Führung der Scheibe 13 genutzt werden, nämlich zur Führung im Kunststoffeinsatz 19. Die im Absperrzustand durch das Fluid ausgeübten Kräfte verursachen deshalb in der Führung der Absperrscheibe in der Absperrscheibe selbst eine relativ geringe Flächenpressung, und dadurch kann auch das Dichtelement 18 kleinflächig gehalten werden.

In der Figur 1 ist ferner der Radius R1 des Strömungsdurchgangs eingezeichnet sowie der Radius R2, welcher der Krümmung der Unterkante 16 der Absperrscheibe 13 zugeordnet ist und sich auch beim oberen, konvex gekrümmten Teil der Aufsitzdichtung 17 wieder findet. Aus der Zeichnung wird schon ersichtlich, dass der Radius R2 wesentlich größer ist als der Radius R1, also die Dichtlinie der Stoßdichtung wesentlich schwächer gekrümmt ist als der Strömungsdurchgang 14. Im dargestellten Fall beträgt das Verhältnis von R2 zu R1 etwa 2,5.

Aufgrund eines solchen sehr flach ausgestalteten Dichteingriffs bei der Aufsitzdichtung können sich Verschmutzungen sehr schlecht an diesem Bereich der Dichtung halten und werden ohne weiteres ausgespült. Der flache untere Radius ist bei 16 zu sehen. Diese flache Krümmung ist, wie gezeigt, lediglich im Mittelbereich vorhanden, wo die Abdichtung stattfindet. Außerhalb dieses Bereiches wird dann eine andere Linienführung für die Unterkante gewählt, beispielsweise ein Übergang auf äußere gerade Abschnitte 22, die dann bis zu den Seitenkanten verlaufen. Durch diese Maßnahme wird an den Außenseiten wieder neue Fläche für die Absperrscheibe 13 hinzugewonnen, die zu einer verbesserten Führung und zu einer Verringerung der Flächenpressung genutzt werden kann.

## Patentansprüche

1. Absperrarmatur mit einem Absperrsystem für Flüssigkeits- oder Gasleitungen, mit einem scheibenförmigen Absperrelement (13), das in den Strömungsdurchgang (14) der Absperrarmatur (10) eingebracht werden kann, um diesen zu verschließen, wobei das Absperrelement (13) zwei in Richtung der Einfahrrichtung des Absperrelements (13) verlaufende Seitenkanten und eine unterhante (16) umfasst,
wobei die Fläche des Absperrelements (13) größer gestaltet ist als die Fläche des Strömungsdurchgangs (14), indem die Breite (B) des Absperrelements (13) senkrecht zur Ein- bzw. Ausfahrrichtung des Absperrelements (13) größer ist als der Durchmesser (D) des Strömungsdurchgangs (14), wobei am Strömungsdurchgang (14) eine Dichtung (18) angeordnet ist, die einen um den Strömungsdurchgang (14) herum angeordneten oberen Abschnitt aufweist, und in ihrem in Einfahrrichtung des Absperrelements (13) liegenden Bereich einen Aufsitzdichtungsabschnitt (17) aufweist, auf dem die Unterhante (16) des Absperrelements (13) im Dichtstoß zu liegen kommen kann, wobei der Aufsitzdichtungsabschnitt (17) eine Krümmung aufweist, die geringer ist als die Krümmung des Strömungsdurchgang, **dadurch gekennzeichnet, dass** die Unterhante (16) des Absperrelements (13) lediglich im Mittelbereich konvex gekrümmt, insbesondere kreisbogenförmig gekrümmt ist, und diese außerhalb des Mittelbereichs eine andere Linienführung aufweist, durch welche an den Anβenseiten des Absperrelements (13) zusätzliche Fläche für das Absperrelement (13) kinzugewonnen wird.

2. Absperrarmotur nach Anspruch 1, **dadurch gekennzeichnet, dass** das Verhältnis der senkrecht zur Ein- bzw. Ausfahrrichtung des Absperrelements (13) verlaufende Breite (B) des Absperrelements (13) zum Durchmesser (D) des Strömungsdurchgangs (14) mindestens 1,1 beträgt.

3. Absperrarmatur nach Anspruch 1, **dadurch gekennzeichnet, dass** das Verhältnis der senkrecht zur Ein- bzw. Ausfahrrichtung des Absperrelements (13) verlaufende Breite (B) des Absperrelements (13) zum Durchmesser (D) des Strömungsdurchgangs (14) mindestens 1,2 beträgt.

4. Absperrarmatur nach Anspruch 1, **dadurch gekennzeichnet, dass** das Verhältnis der senkrecht zur Ein- bzw. Ausfahrrichtung des Absperrelements (13) verlaufende Breite (B) des Absperrelements (13) zum Durchmesser (D) des Strömungsdurchgangs (14) mindestens 1,6 beträgt.

5. Absperrarmatur nach Anspruch 1, **dadurch gekennzeichnet, dass** das Verhältnis der senkrecht zur Ein- bzw. Ausfahrrichtung des Absperrelements (13) verlaufende Breite (B) des Absperrelements (13) zum Durchmesser (D) des Strömungsdurchgangs (14) mindestens 2 beträgt.

6. Absperrarmatur nach Anspruch 1, **dadurch gekennzeichnet, dass** das Verhältnis der senkrecht zur Ein- bzw. Ausfahrrichtung des Absperrelements (13) verlaufende Breite (B) des Absperrelements (13) zum Durchmesser (D) des Strömungsdurchgangs (14) bei Durchmesserbereichen von etwa 30 mm bis etwa 130 mm in einem Bereich von 2 bis 1,5 liegt.

7. Absperrarmatur nach Anspruch 1, **dadurch gekennzeichnet, dass** das Verhältnis der senkrecht zur Ein- bzw. Ausfahrrichtung des Absperrelements (13) verlaufende Breite (B) des Absperrelements (13) zum Durchmesser (D) des Strömungsdurchgangs (14) bei Durchmesserbereichen von etwa 130 mm bis etwa 220 mm in einem Bereich von 1,5 bis 1,2 liegt.

8. Absperrarmatur nach einem der Ansprüche 1 bis 7, **dadurch gekennzeichnet, dass** das Absperrelement (13) an seinen über den Strömungsdurchgang (14) hinausgehenden Flächenteilen, insbesondere an seinen seitlichen Flächenteilen Führungsabschnitte (15) aufweist.

9. Absperrarmatur nach Anspruch 8, **dadurch gekennzeichnet, dass** ein wesentlicher Teil, insbesondere ein Hauptteil der über den Strömungsdurchgang hinausgehenden Flächenteile als Führungsabschnitt dient.

10. Absperrarmatur nach einem der Ansprüche 1 bis 9, **dadurch gekennzeichnet, dass** das Absperrelement aus hochwertigem Edelstahl besteht.

11. Absperrarmatur nach Anspruch 1, **dadurch gekennzeichnet, dass** der Aufsitzdichtungsabschnitt (17) im Mittelbereich konkav gekrümmt, insbesondere kreisbogenförmig gekrümmt ist und der Radius (R2) der Krümmung der Unterkante (16) bzw. des Aufsitzdichtungsabschnitts (17) dort wesentlich größer ist als der Radius (R1) des Strömungsdurchgangs.

12. Absperrarmaturnach einem der Ansprüche 1 bis 11, **dadurch gekennzeichnet, dass** das Verhältnis des Radius der Krümmung der Unterkante (16) bzw. des Aufsitzdichtungsabschnittsradius (R2) zum Strömungsdurchgangsradius (R1) mindestens 1,3 beträgt.

13. Absperrarmatur nach einem der Ansprüche 1 bis 11, **dadurch gekennzeichnet, dass** das Verhältnis des Radius der Krümmung der Unterkante (16) bzw. des Aufsitzdichtungsab-schnittsradius (R2) zum Strömungsdurchgangsradius (R1) mindestens 1,5 beträgt.

14. Absperrarmatur nach einem der Ansprüche 1 bis 11, **dadurch gekennzeichnet, dass** das Verhältnis des Radius der Krümmung der Unterkante (16) bzw. des Aufsitzdichtungsab-schnittsradius (R2) zum Strömungsdurchgangsradius (R1) mindestens 2 beträgt.

15. Absperrarmatur nach einem der Ansprüche 1 bis 11, **dadurch gekennzeichnet, dass** das Verhältnis des Radius der Krümmung der Unterkante (16) bzw. des Aufsitzdichtungsab-schnittsradius (R2) zum Strömungsdurchgangsradius (R1) mindestens 3, speziell 3 bis 4 beträgt.

16. Absperrarmatur nach einem der Ansprüche 1 bis 11, **dadurch gekennzeichnet, dass** das Verhältnis des Radius der Krümmung der Unterkante (16) bzw. des Aufsitzdichtungsabschnittsradius (R2) zum Strömungsdurchgangsradius (R1) bei Strömungsdurchmesserbereichen von etwa 30 mm bis etwa 130 mm in einem Bereich von 4 bis 2 liegt.

17. Absperrarmatur nach einem der Ansprüche 1 bis 11, **dadurch gekennzeichnet, dass** das Verhältnis des Radius der Krümmung der Unterkante (16) bzw. des Aufsitzdichtungsab-schnittsradius (R2) zum Strömungsdurchgangsradius (R1) bei Strömungsdurchmesserbereichen von etwa 130 mm bis etwa 220 mm in einem Bereich von 2 bis 1,3 liegt.

## Claims

1. A shut-off brace comprising a shut-off system for liquid or gas conduits, comprising a disc-shaped shut-off element (13) which can be inserted into the flow passage (14) of the shut-off brace (10) in order to close it, wherein the shut-off element (13) comprises two side edges, which extend in the direction of the inserting direction of the shut-off element (13), and a lower edge (16), wherein the area of the shut-off element (13) is embodied to be larger than the area of the flow passage (14), in that the width (B) of the shut-off element (13) perpendicular to the inserting and/or removing direction of the shut-off element (13) is greater than the diameter (D) of the flow passage (14), wherein a gasket (18) is arranged on the flow passage (14) and comprises an upper portion arranged around the flow passage (14) and a mounted gasket portion (17) in its region which lies in the inserting direction of the shut-off element (13), wherein the lower edge (16) of the shut-off element (13) can come to rest in a sealing abutment on the mounted gasket portion (17), wherein the mounted gasket portion (17) exhibits a curvature which is less than the curvature of the flow passage, **characterised in that** the lower edge (16) of the shut-off element (13) is convexly curved, in particular in the shape of a circular arc, in the central region only and exhibits a different alignment outside of the central region, through which additional area for the shut-off element (13) is gained on the outer sides of the shut-off element (13).

2. The shut-off brace according to claim 1, **characterised in that** the ratio between the width (B) of the shut-off element (13) extending perpendicular to the inserting and/or removing direction of the shut-off element (13) and the diameter (D) of the flow passage (14) is at least 1.1.

3. The shut-off brace according to claim 1, **characterised in that** the ratio between the width (B) of the shut-off element (13) extending perpendicular to the inserting and/or removing direction of the shut-off element (13) and the diameter (D) of the flow passage (14) is at least 1.2.

4. The shut-off brace according to claim 1, **characterised in that** the ratio between the width (B) of the shut-off element (13) extending perpendicular to the inserting and/or removing direction of the shut-off element (13) and the diameter (D) of the flow passage (14) is at least 1.6.

5. The shut-off brace according to claim 1, **characterised in that** the ratio between the width (B) of the shut-off element (13) extending perpendicular to the inserting and/or removing direction of the shut-off element (13) and the diameter (D) of the flow passage (14) is at least 2.

6. The shut-off brace according to claim 1, **characterised in that** the ratio between the width (B) of the shut-off element (13) extending perpendicular to the inserting and/or removing direction of the shut-off element (13) and the diameter (D) of the flow passage (14) is in a range of 2 to 1.5 at diameter ranges of about 30 mm to about 130 mm.

7. The shut-off brace according to claim 1, **characterised in that** the ratio between the width (B) of the shut-off element (13) extending perpendicular to the inserting and/or removing direction of the shut-off element (13) and the diameter (D) of the flow passage (14) is in a range of 1.5 to 1.2 at diameter ranges of about 130 mm to about 220 mm.

8. The shut-off brace according to any one of claims 1 to 7, **characterised in that** the shut-off element (13) comprises guiding portions (15) on the parts of its area which transcend the flow passage (14), in particular on the lateral parts of its area.

9. The shut-off brace according to claim 8, **characterised in that** a substantial part - in particular, a main part - of the parts of the area which transcend the flow passage serve as a guiding portion.

10. The shut-off brace according to any one of claims 1 to 9, **characterised in that** the shut-off element consists of high-grade stainless steel.

11. The shut-off brace according to claim 1, **characterised in that** the mounted gasket portion (17) is concavely curved, in particular in the shape of a circular arc, in the central region and the radius (R2) of the curvature of the lower edge (16) and/or mounted gasket portion (17) in said central region is substantially greater than the radius (R1) of the flow passage.

12. The shut-off brace according to any one of claims 1 to 11, **characterised in that** the ratio between the radius (R2) of the curvature of the lower edge (16) and/or mounted gasket portion (17) and the radius (R1) of the flow passage (14) is at least 1.3.

13. The shut-off brace according to any one of claims 1 to 11, **characterised in that** the ratio between the radius (R2) of the curvature of the lower edge (16) and/or mounted gasket portion (17) and the radius (R1) of the flow passage (14) is at least 1.5.

14. The shut-off brace according to any one of claims 1 to 11, **characterised in that** the ratio between the radius (R2) of the curvature of the lower edge (16) and/or mounted gasket portion (17) and the radius (R1) of the flow passage (14) is at least 2.

15. The shut-off brace according to any one of claims 1 to 11, **characterised in that** the ratio between the radius (R2) of the curvature of the lower edge (16) and/or mounted gasket portion (17) and the radius (R1) of the flow passage (14) is at least 3, specifically 3 to 4.

16. The shut-off brace according to any one of claims 1 to 11, **characterised in that** the ratio between the radius (R2) of the curvature of the lower edge (16) and/or mounted gasket portion (17) and the radius (R1) of the flow passage (14) is in a range of 4 to 2 at flow diameter ranges of about 30 mm to about 130 mm.

17. The shut-off brace according to any one of claims 1 to 11, **characterised in that** the ratio between the radius (R2) of the curvature of the lower edge (16) and/or mounted gasket portion (17) and the radius (R1) of the flow passage (14) is in a range of 2 to 1.3 at flow diameter ranges of about 130 mm to about 220 mm.

## Revendications

1. Armature de verrouillage avec un système de verrouillage pour des conduites de liquides ou de gaz, avec un élément d'arrêt en forme de disque (13), qui peut être introduit dans le passage d'écoulement (14) de l'armature de verrouillage (10), afin de le fermer, dans laquelle l'élément d'arrêt (13) comprend deux bords latéraux s'étendant dans la direction de la direction d'introduction de l'élément d'arrêt (13) et un bord inférieur (16), dans laquelle la surface de l'élément d'arrêt (13) est plus grande que la surface du passage d'écoulement (14), du fait que la largeur (B) de l'élément d'arrêt (13) perpendiculairement à la direction d'entrée ou de sortie de l'élément d'arrêt (13) est plus grande que le diamètre (D) du passage d'écoulement (14), dans laquelle un joint d'étanchéité (18) est disposé sur le passage d'écoulement (14), lequel joint présente une partie supérieure disposée autour du passage d'écoulement (14) et présente, dans sa région située dans la direction d'entrée de l'élément d'arrêt (13), une partie de joint d'étanchéité d'appui (17) sur laquelle le bord inférieur (16) de l'élément d'arrêt (13) peut venir s'appliquer en appui étanche, dans laquelle la partie de joint d'étanchéité d'appui (17) présente une courbure qui est inférieure à la courbure du passage d'écoulement, **caractérisée en ce que** le bord inférieur (16) de l'élément d'arrêt (13) est incurvé de manière convexe uniquement dans la région centrale, en particulier est incurvé en forme d'arc de cercle, et celui-ci présente à l'extérieur de la région centrale un autre tracé, par lequel on récupère une surface supplémentaire pour l'élément d'arrêt (13) sur les côtés extérieurs de l'élément d'arrêt (13).

2. Armature de verrouillage selon la revendication 1, **caractérisée en ce que** le rapport de la largeur (B) de l'élément d'arrêt (13) s'étendant perpendiculairement à la direction d'entrée ou de sortie de l'élément d'arrêt (13) au diamètre (D) du passage d'écoulement (14) vaut au moins 1,1.

3. Armature de verrouillage selon la revendication 1, **caractérisée en ce que** le rapport de la largeur (B) de l'élément d'arrêt (13) s'étendant perpendiculairement à la direction d'entrée ou de sortie de l'élément d'arrêt (13) au diamètre (D) du passage d'écoulement (14) vaut au moins 1,2.

4. Armature de verrouillage selon la revendication 1, **caractérisée en ce que** le rapport de la largeur (B) de l'élément d'arrêt (13) s'étendant perpendiculairement à la direction d'entrée ou de sortie de l'élément d'arrêt (13) au diamètre (D) du passage d'écoulement (14) vaut au moins 1,6.

5. Armature de verrouillage selon la revendication 1, **caractérisée en ce que** le rapport de la largeur (B) de l'élément d'arrêt (13) s'étendant perpendiculairement à la direction d'entrée ou de sortie de l'élément d'arrêt (13) au diamètre (D) du passage d'écoulement (14) vaut au moins 2.

6. Armature de verrouillage selon la revendication 1, **caractérisée en ce que** le rapport de la largeur (B) de l'élément d'arrêt (13) s'étendant perpendiculairement à la direction d'entrée ou de sortie de l'élément d'arrêt (13) au diamètre (D) du passage d'écoulement (14) se situe dans une plage de 2 à 1,5 pour des domaines de diamètres d'environ 30 mm à environ 130 mm.

7. Armature de verrouillage selon la revendication 1, **caractérisée en ce que** le rapport de la largeur (B) de l'élément d'arrêt (13) s'étendant perpendiculairement à la direction d'entrée ou de sortie de l'élément d'arrêt (13) au diamètre (D) du passage d'écoulement (14) se situe dans une plage de 1,5 à 1,2 pour des domaines de diamètres d'environ 130 mm à environ 220 mm.

8. Armature de verrouillage selon l'une quelconque des revendications 1 à 7, **caractérisée en ce que** l'élément d'arrêt (13) présente des parties de guidage (15) sur ses parties de surface s'étendant au-delà du passage d'écoulement (14), en particulier sur ses parties de surface latérales.

9. Armature de verrouillage selon la revendication 8, **caractérisée en ce qu'**une partie importante, en particulier une partie principale des parties de surface s'étendant au-delà du passage d'écoulement (14), sert de partie de guidage.

10. Armature de verrouillage selon l'une quelconque des revendications 1 à 9, **caractérisée en ce que** l'élément d'arrêt est constitué d'acier allié à haute résistance.

11. Armature de verrouillage selon la revendication 1, **caractérisée en ce que** la partie de joint d'étanchéité d'appui (17) est incurvée de façon concave dans la région centrale, en particulier est incurvée en forme d'arc de cercle, et le rayon (R2) de la courbure du bord inférieur (16) ou de la partie de joint d'étanchéité d'appui (17) est à cet endroit nettement plus grand que le rayon (R1) du passage d'écoulement.

12. Armature de verrouillage selon l'une quelconque des revendications 1 à 11, **caractérisée en ce que** le rapport du rayon de la courbure du bord inférieur (16) ou du rayon de la partie de joint d'étanchéité d'appui (R2) au rayon du passage d'écoulement (R1) vaut au moins 1,3.

13. Armature de verrouillage selon l'une quelconque des revendications 1 à 11, **caractérisée en ce que** le rapport du rayon de la courbure du bord inférieur (16) ou du rayon de la partie de joint d'étanchéité d'appui (R2) au rayon du passage d'écoulement (R1) vaut au moins 1,5.

14. Armature de verrouillage selon l'une quelconque des revendications 1 à 11, **caractérisée en ce que** le rapport du rayon de la courbure du bord inférieur (16) ou du rayon de la partie de joint d'étanchéité d'appui (R2) au rayon du passage d'écoulement (R1) vaut au moins 2.

15. Armature de verrouillage selon l'une quelconque des revendications 1 à 11, **caractérisée en ce que** le rapport du rayon de la courbure du bord inférieur (16) ou du rayon de la partie de joint d'étanchéité d'appui (R2) au rayon du passage d'écoulement (R1) vaut au moins 3, spécialement 3 à 4.

16. Armature de verrouillage selon l'une quelconque des revendications 1 à 11, **caractérisée en ce que** le rapport du rayon de la courbure du bord inférieur (16) ou du rayon de la partie de joint d'étanchéité d'appui (R2) au rayon du passage d'écoulement (R1) se situe dans une plage de 4 à 2, pour des domaines de diamètres mouillés d'environ 30 mm à environ 130 mm.

17. Armature de verrouillage selon l'une quelconque des revendications 1 à 11, **caractérisée en ce que** le rapport du rayon de la courbure du bord inférieur (16) ou du rayon de la partie de joint d'étanchéité d'appui (R2) au rayon du passage d'écoulement (R1) se situe dans une plage de 2 à 1,3 pour des domaines de diamètres mouillés d'environ 130 mm à environ 220 mm.
